Europäisches Patentamt

European Patent Office

Office européen des brevets

(11) Veröffentlichungsnummer: **0 338 373 B1**

# (12) EUROPÄISCHE PATENTSCHRIFT

(45) Veröffentlichungstag der Patentschrift: **28.10.92**

(51) Int. Cl.5: **G01M 17/00**, G01M 13/02

(21) Anmeldenummer: **89106314.1**

(22) Anmeldetag: **10.04.89**

(54) Prüfstand zum Testen des Antriebsstranges eines Fahrzeuges.

(30) Priorität: **16.04.88 DE 3812824**

(43) Veröffentlichungstag der Anmeldung:
**25.10.89 Patentblatt 89/43**

(45) Bekanntmachung des Hinweises auf die
Patenterteilung:
**28.10.92 Patentblatt 92/44**

(84) Benannte Vertragsstaaten:
**DE FR GB IT SE**

(56) Entgegenhaltungen:
**DE-A- 3 416 496**
**DE-A- 3 801 647**

**BROWN, BOVERI REVIEW, Band 73, Nr. 2,
Februar 1986, Seiten 94-100, Baden, CH: H.W.
Weyland: "Modern Test Rigs for the Vehicle
Industry"**

(73) Patentinhaber: **Asea Brown Boveri Aktiengesellschaft
Kallstadter Strasse 1
W-6800 Mannheim 31(DE)**

(72) Erfinder: **von Thun, Hans-Jürgen
Gutenbergstrasse 2-4
W-6944 Hemsbach(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

EP 0 338 373 B1

**Beschreibung**

Die Erfindung bezieht sich auf einen Prüfstand zum Testen des Antriebsstranges eines Fahrzeuges gemäß dem Oberbegriff des Anspruchs 1.

Ein solcher Prüfstand zum Testen des Antriebsstranges eines Fahrzeuges ist aus der DE-OS 34 16 496 bekannt. Dort wird ein Verfahren zum Simulieren von Trägheitsmomenten auf Prüfständen mit elektronischen Funktionsgliedern und einer momentengeregelten elektrischen Maschine als Übertragungsglied zwischen den elektronischen Funktionsgliedern und dem Prüfstand mit dem Prüfling beschrieben, bei dem die Prüfstands-Drehzahl gemessen und zur Regelung der elektrischen Maschine herangezogen wird, wobei die Masse des Prüflings und die Masse des Prüfstandes über eine elastische Welle miteinander verbunden sind und als mechanischer Massenschwinger betrachtet werden. Es wird mindestens eine Masse simuliert, deren Größe dem nachzubildenden Trägheitsmoment entspricht, wobei das elektronisch zu simulierende Trägheitsmoment integral mit einer zum nachbildenden Trägheitsmoment proportionalen Zeitkonstante eingestellt wird. Dabei wird eine Federsteifigkeit zwischen dem zu simulierenden Trägheitsmoment und dem mechanischen Massenschwinger integral mit einer Zeitkonstanten derart eingestellt, daß sie dem nachzubildenden Eigenschwingungsverhalten des nachzubildenden Massensystems entspricht. Desweiteren wird die Dämpfung des Massensystems proportional mit einem Verstärkungsfaktor so eingestellt, daß sie dem nachzubildenden Einschwingverhalten des nachzubildenden Massensystems entspricht.

Aus der Brown Boveri Review 73 (1986), Febr., No. 2, Baden, Switzerland, Seiten 94 bis 100 sind moderne Prüfstände für die Fahrzeugindustrie bekannt. Dabei wird unter anderem ein zur Prüfung eines Antriebsstranges eines Vierrad-angetriebenen Fahrzeuges geeigneter Prüfstand beschrieben, der Rollwiderstände und den Reifenradius simuliert.

Der Erfindung liegt die Aufgabe zugrunde, einen Prüfstand zum Testen des Antriebsstranges eines Fahrzeuges der eingangs genannten Art anzugeben, mit dem eine dynamische Erprobung mit Echtzeitsimulation des Fahrzeugverhaltens (Nachbildung der Fahrwiderstände und der Beschleunigungs- und Verzögerungsmomente) möglich ist.

Diese Aufgabe wird in Verbindung mit den Merkmalen des Oberbegriffes erfindungssgemäß durch die im Kennzeichen des Anspruchs 1 angegebenen Merkmale gelöst.

Die mit der Erfindung erzielbaren Vorteile bestehen insbesondere darin, daß ohne Einsatz von Rollen eine Simulation der Räder und des Fahrzeug-Beschleunigungsverhaltens direkt an den Antriebswellen erfolgt. Dabei werden nur diejenigen Anteile simuliert, die real nicht als Fahrzeugkomponenten vorhanden sind, während z.B. der Hauptantriebsstrang, die Achsgetriebe, die treibenden Wellen, die Kupplung, das Getriebe und der Verbrennungsmotor mit ihrem realen Verhalten eingehen.

Dieses rollenlose Prüfen direkt an den Antriebswellen erlaubt vorteilhaft, durchdrehende oder blockierende Räder mit ihren Auswirkungen auf den Antriebsstrang und die Fahrzeug-Längsbewegung systematisch und mit hoher Reproduzierbarkeit zu untersuchen. Statt wie im bisher üblichen Fahrversuch aufwendig Rutschplatten zu präparieren, können bei der Erfindung beliebige Rutschbedingungen durch Parametervorgabe auf einfachste Weise vorgegeben und reproduziert werden. Untersuchungen von Antiblockier- und Antischlupf-Einrichtungen auf dem Prüfstand werden hiermit ermöglicht.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert.

Es zeigen:

Fig. 1    ein Übersichtsschaltbild eines Prüfstandes (am Beispiel eines Allrad-Prüfstandes),

Fig. 2    ein mechanisches Ersatzbild des Antriebes (Allrad-Antrieb),

Fig. 3    das Bewegungsgleichungssystem der Antriebswellen des Fahrzeuges (allradgetriebenes Fahrzeug),

Fig. 4    die Nachbildung einer Antriebsachsenhälfte mit drehmomentgeregelter Gleichstrommaschine und Simulationsrechner,

Fig. 5    die Nachbildung von Kurvenfahrt und unterschiedlichen Radradien,

Fig. 6    die Simulation des Schlupfes,

Fig. 7    die Simulation des durchdrehenden und blockierenden Rades.

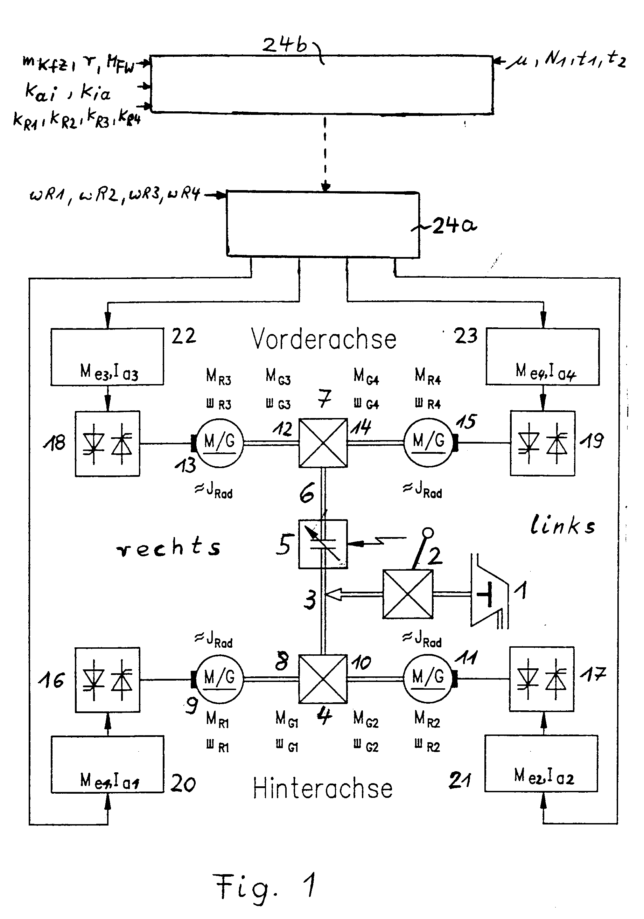

In Fig. 1 ist ein Übersichtsschaltbild eines Prüfstandes dargestellt. Dabei ist ein Allrad-Prüfstand gezeigt; der Prüfstand kann jedoch gleichermaßen als Zweirad-Prüfstand ausgeführt sein. Es ist ein Verbrennungsmotor 1 zu erkennen, der über ein Getriebe 2 mit einem Hauptantriebsstrang 3 verbunden ist. Der Hauptantriebsstrang 3 treibt direkt ein Hinterachsgetriebe 4 sowie über eine Kupplung 5 und einen Nebenantriebsstrang 6 ein Vorderachsgetriebe 7 an (kupplungsgesteuerte Momentverteilung zwischen Vorder- und Hinterachse sowie permanente Antriebsmomenteinleitung in die Hinterachse). Das Hinterachs-

EP 0 338 373 B1

getriebe 4 ist über eine Welle 8 (z.B. Orginalachswelle hinten rechts) mit einer Belastungsmaschine 9 (Radantrieb hinten rechts) sowie über eine Welle 10 (z. B. Originalachswelle hinten links) mit einer Belastungsmaschine 11 (Radantrieb hinten links) verbunden. Das Vorderachsgetriebe ist über eine Welle 12 (z.B. Originalachswelle vorne rechts) mit einer Belastungsmaschine 13 (Radantrieb vorne rechts) sowie über eine Welle 14 (z.B. Originalachswelle vorne links) mit einer Belastungsmaschine 15 (Radantrieb vorne links) verbunden.

Die Achsantriebsmomente an den Wellen 8, 10, 12, 14 sind mit $M_{G1}$, $M_{G2}$, $M_{G3}$, $M_{G4}$ und die zugehörigen Achsantriebs-Winkelgeschwindigkeiten oder Achsantriebs-Drehzahlen sind mit $\omega G1$, $\omega G2$, $\omega G3$, $\omega G4$ bezeichnet. Die Radmomente der Belastungsmaschine 9, 11, 13, 15 sind mit $M_{R1}$, $M_{R2}$, $M_{R3}$, $M_{R4}$ sowie die zulässigen Rad-Winkelgeschwindigkeiten oder Rad-Drehzahlen (Drehzahl-Istwerte) mit $\omega R1$, $\omega R2$, $\omega R3$, $\omega R4$ bezeichnet. Die Trägheitsmomente der Belastungsmaschinen 9, 11, 13, 15 entsprechen den Rad-Trägheitsmomenten $J_{Rad}$.

Wie zu erkennen ist, sind die als Belastungsaggregate eingesetzten elektrischen Maschinen (Belastungsmaschinen 9, 11, 13, 15) statt der Räder direkt an die Wellen des Antriebsstranges angeflanscht. Sie sind auf einer Grundplatte frei positionierbar, um die Abmessungen verschiedener Fahrzeugtypen abdecken zu können. Der Prüfstand ist mechanisch in der Leistung und in der Betriebsarten-Steuerung so ausgelegt, daß wahlweise 4-Rad- oder 2-Rad-getriebene Fahrzeuge getestet werden können. Dabei sind keine Einschränkungen hinsichtlich Art und Ort der Antriebsmomenteinleitung vorhanden. So kann z.B. der Verbrennungsmotor auch durch eine elektrische Maschine ersetzt werden. Auch bezüglich der Momentaufteilung zwischen den Antriebsachsen gibt es keine Beschränkungen.

Jede der vier Belastungsmaschinen 9, 11, 13, 15 muß unabhängig voneinander bremsen und antreiben können zur Nachbildung der Fahrwiderstände und der Beschleunigungsund Verzögerungsmomente (Torsionsbelastungen) an den vier Antriebswellen des Fahrzeuges. Da das Fahrzeug auf dem Prüfstand keine translatorische Bewegung ausführt, müssen die von der Fahrzeugmasse abhängigen Beschleunigungs- und Verzögerungskräfte bzw. - momente an den Antriebswellen von den Belastungsmaschinen nachgebildet werden. Im Vergleich zu den stationären und quasi stationären Fahrwiderständen ändern sich diese Momente sehr schnell. Zu ihrer zeitlich korrekten Simulation müssen Belastungsmaschinen mit sehr schnell veränderbaren Antriebs- und Bremsmomenten eingesetzt werden. Wichtig ist hierfür nicht nur die schnelle Drehmomentänderung im Bremsquadranten oder im Antriebsquadranten, sondern auch der schnelle Übergang vom Bremsmoment zum Antriebsmoment und umgekehrt. Diese Bedingungen werden im erforderlichen Leistungsbereich bestmöglich von Gleichstrom-Nebenschlußmaschinen erfüllt.

Die Belastungsmaschinen 9, 11, 13, 15 werden von Stromrichtern 16, 17, 18, 19 aus einem (nicht dargestellten) Drehstromnetz gespeist. Zur Regelung auf die inneren Maschinenmomente (Drehmomente) $M_{e1}$, $M_{e2}$, $M_{e3}$, $M_{e4}$ und die Ankerströme $I_{a1}$, $I_{a2}$, $I_{a3}$, $I_{a4}$ der Belastungsmaschinen 9, 11, 13, 15 sind Regeleinrichtungen 20, 21, 22, 23 vorgesehen. Ein von einem übergeordneten Leitrechner 24b beeinflußbarer Simulationsrechner 24a steuert diese Regeleinrichtungen 20, 21, 22, 23 an.

Die Momente $M_{e1}$, $M_{e2}$, $M_{e3}$, $M_{e4}$ sind die dynamisch korrekten Größen, die zur Simulation benötigt werden (Simulation der Fahrwiderstände, d.h. die Lösung des nachstehend angegebenen Differentialgleichungssystem für die Fahrzeug-Längsbewegung durch den Simulationsrechner 24a). Die Momente $M_{e1}$, $M_{e2}$, $M_{e3}$, $M_{e4}$ sind praktisch unabhängig von der Prüfstands-Prüflingsmechanik: Eigenfrequenz der Mechanik und Lose im Prüfling haben keinen Einfluß auf die Drehmoment-Regeldynamik. Der gegebenenfalls einzige, aber behebbare Nachteil der Gleichstrommaschine kann sich bei der nachstehend beschriebenen Simulation der durchdrehnden oder blockierenden Räder zeigen: Im allgemeinen ist das Trägheitsmoment des Ankers und der Koppelelemente größer als das Rad-Trägheitsmoment des zu prüfenden Fahrzeuges. Dieser Nachteil läßt sich durch geeignete Auswahl der Maschinen (trägheitsarme, schlanke Bauform) minimieren bzw. durch Trägheitsmoment-Reduktion mittels Anpaßgetriebe gänzlich beheben. Die Lose in einem solchen losearm aufgebauten Hochtreiber-Getriebe ist vernachlässigbar gegenüber der Lose im Prüfling (Differentiale, Getriebe, Kardanwellen).

Die Prüfstandssteuerung und Parametrierung des Simulationsmodells erfolgt vom übergeordneten Leitrechner 24b. Statt die translatorische Fahrzeugbewegung in der x-y-Ebene zu beschreiben, sollen die folgenden Betrachtungen der Einfachheit halber für rotatorische Bewegung an den Antriebsachsen durchgeführt werden. Alle Momente, Drehzahlen un Trägheitsmomente können über die Radradien r in Kräfte, Geschwindigkeiten und Massen zurückgerechnet werden.

Aus den äußeren stationären und quasistationären Fahrwiderstandsmomenten

$$M_{FW} = b_0 + b_1 \, \omega_{Kfz} + b_2 \, \omega^2_{Kfz}$$

(mit Winkelgeschwindigkeit $\omega_{Kfz} = v_{Kfz}/r$,

3

$V_{Kfz}$ = Fahrzeuggeschwindigkeit, r = Radradius, $b_0$, $b_1$, $b_2$ sind die Koeffizienten für die stationären bzw. quasistationären Steigungs-, Roll- und Luftwiderstände)

und dem Antriebsmoment, das die vier Antriebswellen über die Reifen auf die Fahrbahn übertragen, ergibt sich das Beschleunigungsmoment. Damit wird das Fahrzeug-Trägheitsmoment (Fahrzeugmassen-äquivalentes Trägheitsmoment)

$$J_{Kfz} = m_{Kfz}r^2$$

($m_{Kfz}$ = Fahrzeugmasse)

beschleunigt oder verzögert.

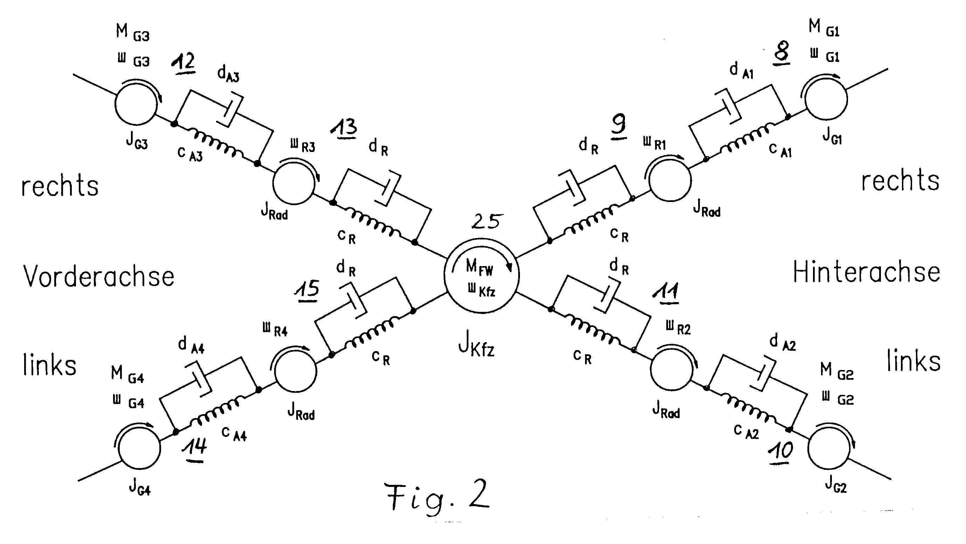

Für die schlupffreie Geradeausfahrt kann somit ein mechanisches Ersatzbild des Antriebs (Allrad-Antrieb) gemäß Fig. 2 angesetzt werden: An das Fahrzeugträgheitsmoment $J_{Kfz}$ (Fahrzeug 25) im Sternpunkt der vier Antriebsräder (Belastungsmaschine 9, 11, 13, 15, Radwinkelgeschwindigkeiten $\omega_{R1}$... $\omega_{R4}$) greifen die von der Reifensteifigkeit $c_R$ und Reifendämpfung $d_R$ übertragenen Antriebsmomente und das äußere Fahrwiderstandsmoment $M_{FW}$ (Winkelgeschwindigkeit $\omega_{Kfz}$) an.

Auf die 4-Rad-/Reifenträgheitsmomente $J_{Rad}$ werden die Antriebsmomente über die vier Antriebswellen (Wellen 8, 10, 12, 14) mit ihren Elastizitäten (Federkonstanten des Achsantriebs) $c_{A1}$, $c_{A2}$, $c_{A3}$, $c_{A4}$ und Dämpfungen (Dämpfungsmaß des Achsantriebes) $d_{A1}$, $d_{A2}$, $d_{A3}$, $d_{A4}$ von den vier Achsgetriebe-Ausgängen mit den Trägheitsmomenten $J_{G1}$, $J_{G2}$, $J_{G3}$, $J_{G4}$ übertragen (Achsantriebsmomente $M_{G1}$, $M_{G2}$, $M_{G3}$, $M_{G4}$, Achsantrieb-Winkelgeschwindigkeiten $\omega G1$... $\omega G4$).

Die Antriebswellen (Wellen 8, 10, 12, 14) sind real im Prüfling vorhanden, ebenso die weiter innen im Antriebsstrang liegenden Komponenten (Vorderachsgetriebe 7, Nebenantriebsstrang 6, Hinterachsgetriebe 4, Hauptantriebsstrang 3, ferner Verbrennungsmotor 1, Getriebe 2, Kupplung 5). Sie brauchen bei der folgenden Modellbildung nicht nachgebildet zu werden. Deshalb wird das mechanische Ersatzbild und das folgende Differentialgleichungssystem bei den Achsgetriebe-Ausgängen abgebrochen.

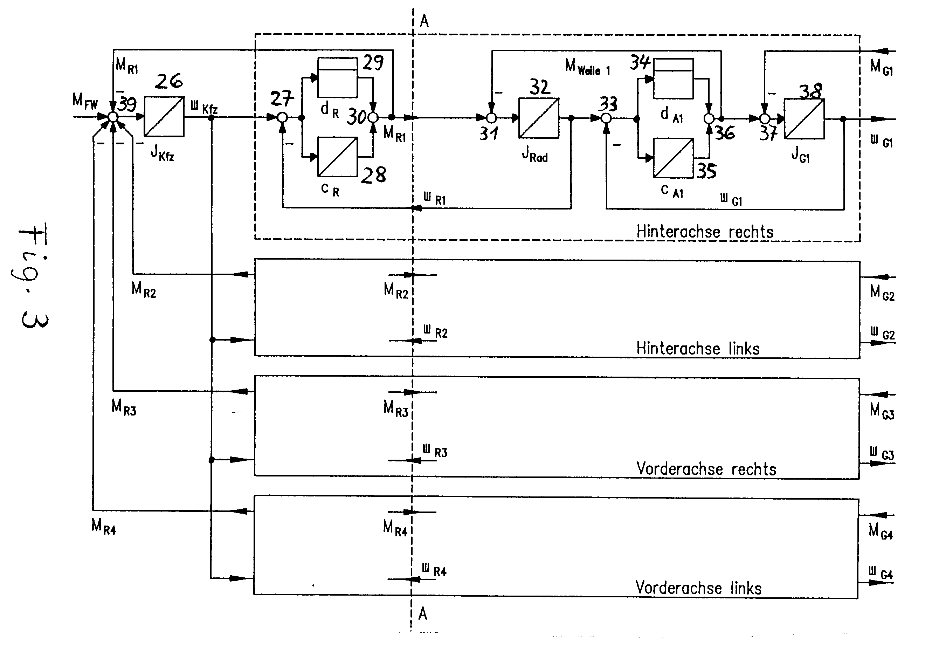

Für das zu simulierende Fahrzeugmodell wird ein lineares System angenommen: Lineare Federcharakteristik und geschwindigkeitsproportionale Dämpfung für Reifen und Achswellen. Aus dieser Annahme ergibt sich das Differentialgleichungssystem für die translatorische Fahrzeugbewegung (dargestellt mit $\omega_{Kfz}$ statt $V_{Kfz}$). Die graphische Darstellung des Differentialgleichungssystems als Signalflußplan, d.h. das Bewegungsgleichungssystem der Antriebswellen des Fahrzeuges (allrad-getriebenen Fahrzeuges) zeigt Fig. 3.

Dabei wird das Ausgangssignal $\omega_{Kfz}$ eines Integrierers 26 (Zeitkonstante proportional zu $J_{Kfz}$) einer Vergleichsstelle 27 zugeleitet. Eingangsseitig liegt dem Integrierer 26 das mittels einer Vergleichsstelle 39 gebildete Differenzsignal $M_{FW}$ - $M_{R1}$ - $M_{R2}$ - $M_{R3}$ - $M_{R4}$ an. Die Vergleichsstelle 27 bildet die Differenz $\omega_{Kfz}$ - $\omega_{R1}$ und leitet diese einem Integrierer 28 (Zeitkonstante proportional zu $c_R$) sowie einem parallelliegenden Proportionalglied 29 (Verstärkungsfaktor proportional zu $d_R$) zu. Die Ausgangssignale dieser Bauglieder 28, 29 werden in einer Summationsstelle 30 summiert, deren Ausgangssignal $M_{R1}$ der Vergleichsstelle 39 und einer Vergleichsstelle 31 zugeleitet wird. Die Vergleichsstelle 31 bildet die Differenz $M_{R1}$ - $M_{Welle1}$ ($M_{Welle}$ = Wellenmoment) und führt diese einem Integrierer 32 (Zeitkonstante proportional zu $J_{Rad}$) zu. Das Ausgangssignal $\omega_{R1}$ des Integrierers 32 wird der Vergleichsstelle 27 sowie einer Vergleichsstelle 33 zugeleitet. Die Vergleichsstelle 33 bildet die Differenz $\omega_{R1}$ - $\omega G1$ und leitet diese einem Proportionalglied 34 (Verstärkungsfaktor proportional zu $d_{A1}$) sowie einem parallelliegenden Integrierer 35 (Zeitkonstante proportional zu $c_{A1}$) zu. Die Ausgangssignale dieser Bauglieder 34, 35 werden in einer Summationstelle 36 addiert. Das Ausgangssignal $M_{Welle1}$ dieser Summationsstelle 36 wird der Vergleichsstelle 31 und einer Vergleichsstelle 37 zugeleitet. Die Vergleichsstelle 37 bildet die Differenz $M_{Welle1}$ - $M_{G1}$ und leitet diese einem Integrierer 38 (Zeitkonstante proportional zu $I_{G1}$) zu. Das Ausgangssignal $\omega_{G1}$ des Integrierers 38 wird der Vergleichsstelle 33 zugeführt. Die am Beispiel der Hinterachse rechts vorstehend erläuterte graphische Darstellung des Differentialgleichungssystems läßt sich in gleicher Art und Weise für die Hinterachse links, Vorderachse rechts, Vorderachse links entwickeln, wie in Fig. 3 angedeutet ist.

In dem Simulatiosmodell von Fig. 3 werden die Radträgheitsmomente $J_{Rad}$ mechanisch simuliert durch Anpassung der Maschinenträgheitsmomente (Belastungsmaschinen) auf die Radträgheitsmomente $J_{Rad}$.

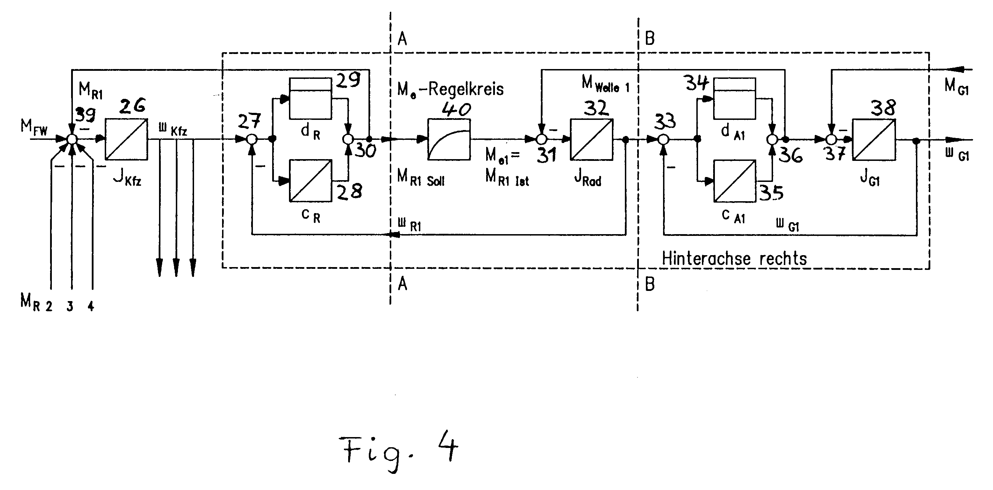

Der Differentialgleichungssteil links der Trennungslinie (Schnittstelle) AA wird in dem schnellen Simulationsrechner 24a "on line" gelöst. In den Simulationsrechner 24a werden die vier Drehzahlistwerte $\omega_{R1}$ bis $\omega_{R4}$ eingespeist. Sie werden an den vier Belastungsmaschinen gemessen. Der Simulationsrechner 24a liefert aus den vier Drehzahlistwerten über das Simulationsmodell links der Trennlinie AA die vier Drehmoment-Sollwerte $M_{R1}$....-$M_{R4}$. Diese müssen über die vier möglichst schnellen Drehmoment-Regelkreise (Regeleinrichtungen 20 bis 23) in den Balstungsmaschinen als Istwert aufgebaut werden. Damit ändert sich das ideale Simulationsmodell von Fig. 3 in das reale Simulationsmodell von Fig. 4.

In Fig. 4 ist die Nachbildung einer Antriebsachsenhälfte mit drehmomentgeregelter Gleichstrommaschine und Simulationsrechnern dargestellt. Hierbei ist der zu einer Antriebswelle gehörende Drehmoment-Regelkreis als Ersatz-Tiefpaß eingetragen. In gleicher Weise sind die Drehmomentregelkreise für die übrigen Antriebswellen im Differentialgleichungssystem als Ersatz-Tiefpässe darstellbar. Der Ersatz-Tiefpaß für den $M_{e1}$-Regelkreis (Hinterachse rechts) ist in Fig. 4 mit Ziffer 40 bezeichnet. Der Ersatz-Tiefpaß (bzw. Drehmomentregelkreis) 40 ist zwischen Summationsstelle 30 und Vergleichsstelle 31 angeordnet. Das Radmoment $M_{R1}$ wird dem als Ersatz-Tiefpaß 40 dargestellten Drehmomentregelkreis als Radmoment-Sollwert $M_{R1soll}$ zugeleitet. Ausgangsseitig gibt dieser Regelkreis 40 den Radmoment-Istwert $M_{Rist} = M_{e1}$ and die Vergleichsstelle 31 ab. Die übrige Anordnung ist wie unter Fig. 3 beschrieben. Der Differentialgleichungstell links der Schnittstelle AA wird im Simulationsrechner 24a gelöst, wie bereits erwähnt. Der Differentialgleichungsteil zwischen den Schnittstellen AA und BB enspricht dem Anteil der Balstungsmaschinen + Stromrichter + Regeleinrichtung ($M_e$-Regelung). Der Differentialgleichungsteil rechts der Schnittstelle BB entspricht dem Anteil des Prüflings.

Die Drehmomentregelkreise (z.B. Ersatz-Tiefpaß 40) beeinträchtigen nur dann die Simulationsdynamik nicht, wenn ihre Grenzfrequenz hoch genug ist im Vergleich zur angestrebten Simulationsdynamik. Weiterhin erkennt man aus Fig. 4, daß die Belastungsmaschinen auf ihr inneres Drehmoment $M_{e1}.....M_{e4}$ geregelt werden müssen. Darüberhinaus erkennt man deutlich, daß die Verwendung von Meßwellen eine Regelung auf $M_{Welle1} ... M_{Welle4}$ bedeuten würde, was einer erheblichen Strukturverfälschung des Simulationsmodells entspräche.

Bei Kurvenfahrt werden nur die Beschleunigungsanteile der translatorischen Fahrzeugbewegung in der x-y-Ebene berücksichtigt. Giermomente sind bei den vorkommenden Kurvenradien und Beschleunigungen um die z-Achse vernachlässigbar (im Gegensatz zu Kettenfahrzeugen). Damit ergibt sich aus dem Simulationsmodell nach Fig. 3 oder 4 eine einfache Möglichkeit für Kurven-Simulation:
Die Winkelgeschwindigkeiten $\omega_{R1}$, $\omega_{R3}$ für die Kurveninneren Räder und $\omega_{R2}$, $\omega_{R4}$ für die kurvenäußeren Räder bzw. umgekehrt, ergeben sich aus der Fahrzeuggeschwindigkeit und der Kurvengeometrie.

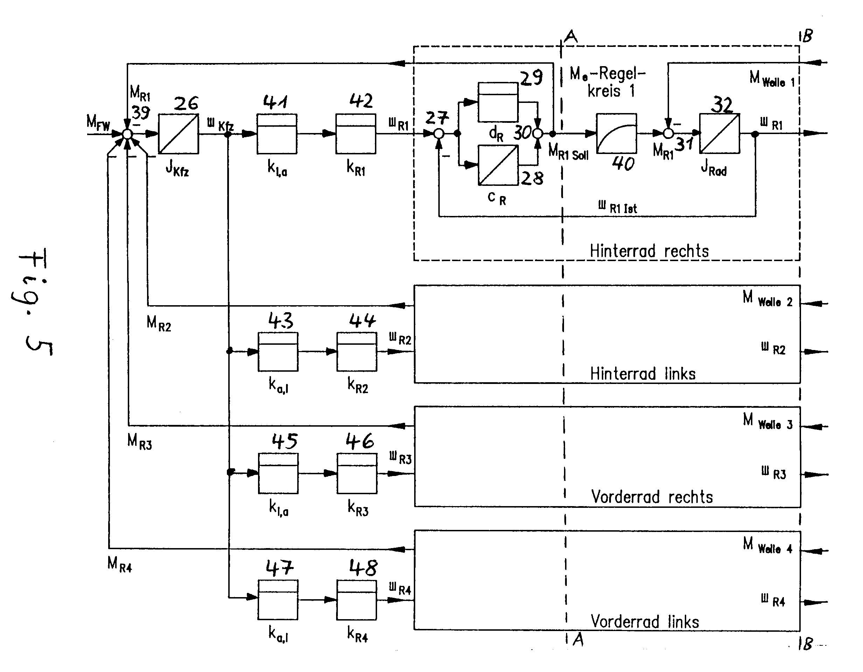

In Fig. 5 ist die Nachbildung von Kurvenfahrt und unterschiedlichen Radradien dargestellt. Die Kurvenfahrt wird durch vier Proportionalglieder 41, 43, 45, 47 zwischen Integrierer 26 und Vergleichsstelle 27 (bzw. weiteren Vergleichsstellen der übrigen Differentialgleichungssysteme) mit den Verstärkungsfaktoren für Kurvenfahrt $k_{i,a}$ (für 41 bzw. 45, d.h. Hinterrad rechts, bzw. Vorderrad rechts) und $k_{a,i}$ (für 43 bzw. 47, d.h. Hinterrad links bzw. Vorderrad links) simuliert. Durch geeignete Parametervorgabe geht das Simulationsmodell in Geradeausfahrt über. Die Parameter werden vom Betreiber über den Leitrechner 24b vorgegeben, bei Bedarf als Funktion der Zeit.

Unterschiedliche Radradien an Vorder- und Hinterachse führen bei nichtschlüpfenden Rädern zu Differenzdrehzahlen zwischen Vorder- und Hinterachse. Die Drehzahldifferenzen, die sich an den einzelnen Antriebswellen durch unterschiedliche Radradien - bis hin zu unterschiedlich abgefahrenen Reifen - ergeben, werden im Simulationsmodell durch vier Proportionalglieder 42, 44, 46, 48 zwischen Integrierer 26 und Vergleichsstelle 27 (bzw. weiteren Vergleichsstellen der übrigen Differentialgleichungssysteme) mit den Verstärkungsfaktoren für unterschiedliche Radradien $k_{R1}$, $k_{R2}$, $k_{R3}$, $k_{R4}$ vorgegeben.

Bei entsprechender Vorgabe findet also Ausgleichsbewegung in den Achsgetrieben statt und es stellt sich eine Differenzdrehzahl zwischen Vorder- und Hinterachse ein. Die Verstärkungsfaktoren $k_{R1}...k_{R4}$ werden vom Betreiber über den Leitrechner 24b vorgegeben (siehe Fig. 1).

Wie Fig. 5 auch zeigt, können Kurvenfahrt und unterschiedliche Radradien gleichzeitig vorgegeben werden, um ihren Gesamteinfluß auf den Prüfling zu untersuchen. In diesem Fall sind je ein Proportionalglied für Kurvenfahrt und je ein Proportionalglied für unterschiedliche Radradien in Reihe geschaltet.

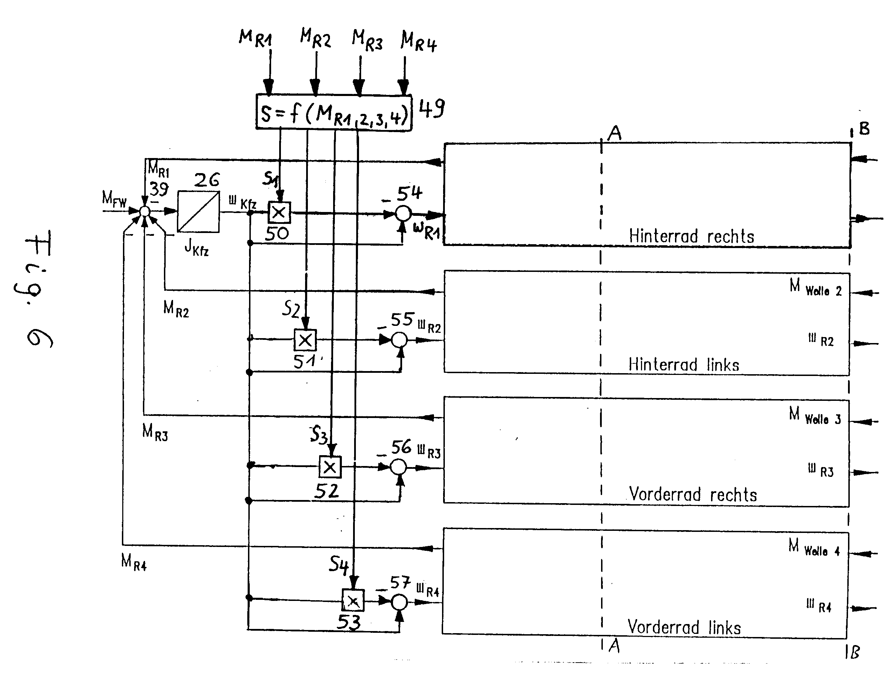

In Fig. 6 ist die Simulation des Schlupfes dargestellt. Dem Reifenschlupf, der für alle vier Räder gleich sein möge, ist im realen Fahrzeug ein zusätzlicher Schlupf überlagert, der sogenannte kinematische Schlupf, der durch die kinematischen Verhältnisse an den Rädern entsteht. Dieser kinematische Schlupf verhindert im Fahrzeug eine unzulässige Achsverspannung: ohne kinematischen Schlupf führen die geringsten Abweichungen in den Radradien zu Achsverspannung, bis das Sperrmoment im Achsgetriebe überschritten wird und die zum Verdrehwinkel integrierte Drehzahldifferenz ausgeglichen wird. Somit würde im Fahrzeug ohne Schlupf bei Geradeausfahrt eine sägezahnförmige Momentenschwankung auftreten.

Der gleiche Effekt tritt am Prüfstand bei der Simulation von Geradeausfahrt mit gleichen Radradien auf, wenn man keinen kinematischen Schlupf simuliert: beim ungesperrten Achsgetriebe tritt die sägezahnförmige Momentenschwankung auf und beim gesperrten Differential laufen die Maschinen auf ihre maximalen (gegensinnigen) Momente hoch. Am Prüfstand wird der Effekt durch Fehler z.B. in der Drehzahlerfassung hervorgerufen. Da sich auch mit höchster Sorgfalt stationär nicht absolut gleich große Werte von $\omega_{R1}$, $\omega_{R2}$, $\omega_{R3}$, $\omega_{R4}$ messen und regeln lassen, kommt es zur Integration der Drehzahldifferenzen und damit zu Verspannwinkeln und -momenten (je genauer die Drehzahlen übereinstimmen, desto niedriger ist die Frequenz der Sägezahnschwingung). Um diese unerwünschte Verspannung des Antriebsstranges auch am Prüfstand zu verhindern, kann und muß der kinematische Schlupf simuliert werden. Als Bezugsgröße für den Schlupf wird $\omega_{Kfz}$ gewählt, so daß sich für die vier Räder als Schlupf

$$s_{1,2,3,4} = \frac{\omega_{Kfz} - \omega_{R1,2,3,4}}{\omega_{Kfz}}$$

ergibt. Die Raddrehzahlen $\omega_{R1}$, $\omega_{R2}$, $\omega_{R3}$, $\omega_{R4}$ ergeben sich dann als

$\omega_{R1,2,3,4} = \omega_{Kfz} (1 - s_{1,2,3,4})$.

Fig. 6 zeigt die zugehörige Simulationsschaltung. Hierzu wird der Schlupf $s_1$, $s_2$, $s_3$, $s_4$ als Funktion der Radmomente $M_{R1}$, $M_{R2}$, $M_{R3}$, $M_{R4}$ von einem Rechner 49 berechnet und Multiplizierern 50, 51, 52, 53 vorgegeben. Die Multipluzierer 50, 51, 52, 53 bilden jeweils das Produkt $\omega_{Kfz} \cdot s_1$, $\omega_{Kfz} \cdot s_2$, $\omega_{Kfz} \cdot s_3$, $\omega_{Kfz} \cdot s_4$ und führen diese Produkte Vergleichsstellen 54, 55, 56, 57 zu. Die Vergleichsstellen 51 bilden jeweils die Differenz

$\omega_{R1} = \omega_{Kfz} - \omega_{Kfz} \cdot s_1$,
$\omega_{R2} = \omega_{Kfz} - \omega_{Kfz} \cdot s_2$,
$\omega_{R3} = \omega_{Kfz} - \omega_{Kfz} \cdot s_3$,
$\omega_{R4} = \omega_{Kfz} - \omega_{Kfz} \cdot s_4$.

Rechner 49 und Multiplizierer 50 bis 53 können Bestandteile des Simulationsrechners 24a sein, Rechner 49 kann aber auch im Leitrechner 24b enthalten sein.

Der Schlupf $s_1 ... s_4$ kann auf verschiedene Weise errechnet werden, z.B. in der Weise, daß der Betreiber die Einhaltung bestimmter Momentverteilungen im Antriebsstrang über den Leitrechner 24b vorgeben kann.

Auf den ersten Blick liegt es nahe, die in Fig. 6 beschriebene Simulationsschaltung für den kinematischen Schlupf auch für durchdrehende oder blockierende Räder zu verwenden. Man kann sich vorstellen, den Schlupf als s(t) so zu berechnen, daß das Rad mit einem bestimmten Drehzahlgradienten hochläuft oder abgebremst wird. Dieses Verfahren hat jedoch den Nachteil, daß man die Momentenaufteilung im Antriebsstrang während des Schlüpfens kennen muß, um die erwartete Momentenbilanz am schlüpfenden Rad zur Errechnung des Drehzahlgradienten heranziehen zu können. Diese Momentenaufteilung ist ja aber gerade das, was untersucht werden soll, vor allem, wenn während des Durchdrehens Sperren betätigt werden. Weiterhin ist zu beachten, daß das Durchdrehen oder Blockieren eines Rades ein sehr schneller Vorgang ist, daher sollte auch aus Gründen der Simulationsdynamik dieser Vorgang nicht über eine Drehzahlregelung erfolgen.

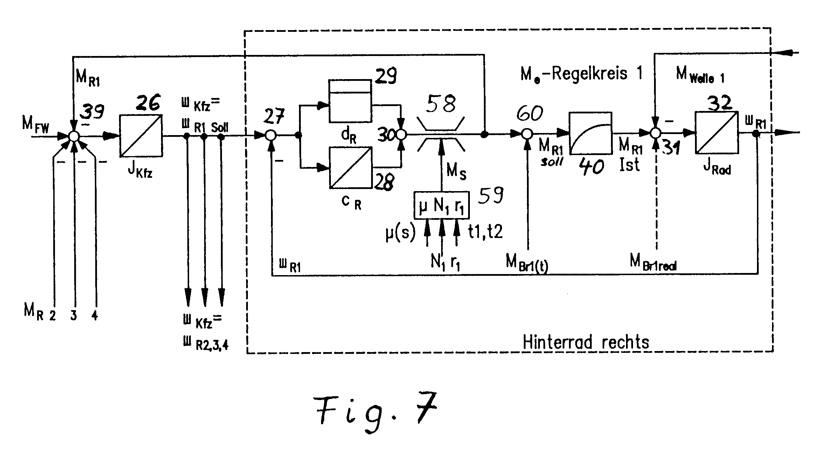

Die in Fig. 7 am Beispiel von Rad 1 dargestellte Simulation des durchdrehenden und blockierenden Rades sieht deshalb vor, das durchdrehende/blockierende Rad an der physikalisch korrekten Stelle zu simulieren: vom Reifen kann nur das Moment auf die Fahrbahn übertragen werden, das kleiner als das Schlupfmoment (Haftmoment, Rutschmoment) $\mu \cdot N_1 r_1$ ist.

$d_R(\omega_{Kfz} - \omega_{R1}) + c_R \int (\omega_{Kfz} - \omega_{R1})dt < \mu N_1 r_1$

mit $\mu$ = Kraftschlußbeiwert und
$N_1$ = Reifenaufstandskraft.

Diese Ungleichung ist in Fig. 7 am Beispiel eines Antriebsrades (z.B. Hinterrad rechts) eingetragen. Die Anordnung gemäß Fig. 7 entspricht der Anordnung gemäß Fig. 4 wobei zwischen Summationsstelle 30 und Drehmomentregelkreis 40 ein Begrenzer 58 zur Begrenzung des Wertes $M_{R1soll}$ auf das Schlupfmoment $M_S$ vorgesehen ist. Das Schlupfmoment $M_S$ wird mittels eines Rechners 59 aus dem Kraftschlußbeiwert $\mu$, der Reifenaufstandskraft $N_1$ und dem Radradius $r_1$ (rechtes Hinterrad) bestimmt. Wenn das von der ersten Antriebswelle auf den ersten Reifen übertragene Moment $M_{Welle1} > \mu \cdot N_1 r_1$ ist, läuft der PI-Algorithmus an die Begrenzung. Damit greift am Radträgheitsmoment nur noch $M_{Welle1} - \mu N_1 r_1$ als Beschleunigungsmoment an und das Rad dreht durch.

Der Betreiber initiiert das Durchdrehen, indem er die Begrenzung über den Leitrechner 24b vom Kraftschlußbeiwert $\mu$ für eine griffige Fahrbahn auf den Kraftschlußbeiwert $\mu$ für eine glatte Fahrbahn (z.B. Eisplatte) herabsetzt. Am Ende der Eisplatte wird der Kraftschlußbeiwert $\mu$ schlupfabhängig erhöht, so daß das Rad wieder synchronisiert wird.

Bei Reduktion des Antriebsmomentes (Gaswegnahme, einsetzende Sperrwirkungen in den Achsgetrieben) auf Werte kleiner als das Schlupfmoment $M_S = \mu N_1 r_1$ synchronisiert das Rad wieder und der PI-Algorithmus löst sich von der Begrenzung. Das Rad überträgt wieder das Antriebsmoment.

Wie man in Fig. 7 sieht, wirkt auch beim durchdrehenden Rad das Schlupfmoment $\mu N_1 r_1$ über die Rückkopplung $M_{R1}$ noch beschleunigend auf das Fahrzeugträgheitsmoment $J_{Kfz}$ - wie im realen Fahrzeug.

Der fahrbahn- und schlupfabhängige Kraftschlußbeiwert $\mu$, die fahrdynamik-abhängige Reifenaufstandskraft $N_1$ und die Anfangs- und Endzeitpunke $t_1$, $t_2$ werden vom Betreiber über den Leitrechner 24b als $M_S = f(\mu, N_1 r_1, t)$ vorgegeben (siehe Fig. 1).

Wenn - wie beim hier beschriebenen Prüfstand - vorgesehen ist, den Prüfling ohne Räder und ohne Bremsen aufzubauen, kann auch die Bremse simuliert werden, indem an der Summationsstelle 60 in Fig. 7 vom Betreiber über den Leitrechner 24b ein Bremsmoment-Sollwert $M_{Br1}(t)$ vorgegeben wird. Bei $M_{Br1} > \mu N_1 r_1$ spricht die Begrenzung an und das Rad (Hinterrad rechts) rutscht durch bis zum Blockieren.

Wenn - wie bei einem alternativ hierzu gebauten Prüfstand - das Fahrzeug mit Bremsen aufgebaut wird, muß natürlich an der Summationsstelle 60 kein Bremsmoment simuliert werden. Bei diesem Aufbau wirkt das reale Bremsmoment $M_{Br1\ real}$ auf den Maschinenanker der Belastungsmaschine, der ja auf das Radträgheitsmoment $J_{Rad}$ ausgelegt wurde: $M_{Br1\ real}$ greift an der Vergleichsstelle 31 in Fig. 7 an. Dieses reale Bremsmoment wirkt natürlich über die Simulationsschaltung genauso auf die Fahrzeuggeschwindigkeit wie alle übrigen von der Antriebswelle übertragenen Momente. Auch hier spricht bei zu großem Bremsmoment $M_{Br1\ real} \mu N_1 r_1$ die Begrenzung an, so daß das simulierte Rad zu rutschen beginnt - bis zum Blockieren. Hiermit eröffnet sich die Möglichkeit, Antiblockiersysteme auf dem Prüfstand zu erproben.

Die am Beispiel des Hinterrades rechts beschriebenen Simulationsverfahren (Durchdrehen, Blockieren) können natürlich in beliebiger zeitlicher Zuordnung an allen Rädern aktiviert werden.

Der Prüfstand kann ebenfalls für 2-Rad-getriebene Fahrzeuge verwendet werden. Hierzu wird die nicht treibende Achse nicht an die zugehörigen Belastungsmaschinen angeschlossen und die zugehörigen Parameter werden nicht gesetzt. Es können jedoch auch die nicht treibende Achse mit den Belastungsmaschinen gekoppelt und das Simulationsmodell für alle vier Räder parametriert werden. Dann wird über das Simulationsmodell die nicht treibende Achse wie im Fahrzeug auf der Straße mitgedreht. Dieser Aufbau hat z.B. dann Sinn, wenn bei 2-Rad-getriebenen Fahrzeug an allen vier Rädern ein Antiblockier-System erprobt werden soll.

Selbstverständlich kann auf dem beschriebenen Prüfstand bei entsprechender mechanischer Anpassung auch das komplette Fahrzeug aufgebaut werden. Anstelle der Räder werden dann die Belastungsmaschinen angeflanscht.

## Patentansprüche

1. Prüfstand zum Testen des Antriebsstranges eines Fahrzeuges vom Verbrennungsmotor (1) bis zu den Antriebsachsen (8,10,12,14), wobei Trägheitsmoment ($J_{G1}...J_{G4}$), Federsteifigkeiten ($C_{A1}...C_{A4}$) und Dämpfungsmaße ($d_{A1}...d_{A4}$) mittels elektronischer Funktionsglieder oder mittels eines Rechners (24a,24b) simuliert werden und momentengeregelte elektrische Belastungsmaschinen (9,11,13,15) als Übertragungsglieder zwischen den elektronischen Funktionsgliedern oder dem Rechner und dem Prüfstand mit dem Prüfling dienen, dadurch gekennzeichnet, daß mindestens zwei voneinander unabhängige Belastungsmaschinen (9,11,13,15) direkt an die Wellen des zu prüfenden Antriebsstranges (8,10,12,14) anflanschbar sind, daß mittels der elektronischen Funktionsglieder oder des Rechners eine Simulation der Räder ($C_R, d_R$) und des Fahrzeug-Beschleunigungserhaltens mit Ausnahme der real als Fahrzeugkomponenten vorhandenen Teile erfolgt, und daß das um die Radmomente ($M_{R1}$, $M_{R2}$, $M_{R3}$, $M_{R4}$) verminderte Fahrzeugwiderstandsmoment ($M_{FW}$) einem ersten Integrierer (26) mit einer zum Fahrzeug-Trägheitsmoment ($J_{Kfz}$) proportionalen Zeitkonstanten zugeleitet wird, wobei am ersten Integrierer (26) die der Fahrzeuggeschwindigkeit ($v_{Kfz}$) proportionale Winkelgeschwindigkeit ($\omega_{Kfz}$) abgreifbar ist.

2. Prüfstand nach Anspruch 1, dadurch gekennzeichnet, daß zur Radmoment-Nachbildung die jeweils in ersten Vergleichsstellen (27...) um die Raddrehzahl ($\omega_{R1}$, $\omega_{R2}$, $\omega_{R3}$, $\omega_{R4}$) verminderte Winkelgeschwindigkeit ($\omega_{Kfz}$) jeweils einem zweiten Integrierer (28...) mit einer zur Reifenelastizität ($c_R$) proportionalen Zeitkonstante und jeweils parallelgeschalteten ersten Proportionalgliedern (29....) mit einem zur Reifendämpfung ($d_R$) proportionalen Verstärkungsfaktor zugeleitet wird, wobei jeweils die Ausgangssignale der zweiten Integrierer (28...) und der ersten Proportionalglieder (29...) zum Radmoment ($M_{R1}$, $M_{R2}$, $M_{R3}$, $M_{R4}$) summiert werden.

3. Prüfstand nach Anspruch 2, dadurch gekennzeichnet, daß zur Simulation einer Kurvenfahrt des Fahrzeuges jeweils dritte Proportionalglieder (41,43,45,47) mit jeweils unterschiedlichen Verstärkungsfaktoren ($K_{i,a}$; $K_{a,i}$) für kurveninnere und kurvenäußere Räder zwischen erstem Integrierer (26) und der jeweiligen ersten Vergleichsstelle (27) vorgesehen sind.

4. Prüfstand nach einem der Ansprüche 1 bis 3, dadurch gekennzeichnet, daß zur Simulation unterschiedlicher Radradien ($r_1$, $r_2$, $r_3$, $r_4$) jeweils vierte Proportionalglieder (42,44,46,48) mit jeweils unterschiedlichen Verstärkungsfaktoren ($K_{R1}$,$K_{R2}$,$K_{R3}$,$K_{R4}$) für jedes einzelne Rad zwischen erstem Integrierer (26) und der jeweiligen ersten Vergleichsstelle (27...) vorgesehen sind.

5. Prüfstand nach einem der Ansprüche 1 bis 4, dadurch gekennzeichnet, daß zur Simulation des kinematischen Schlupfes jeweils Multiplizierer (50,51,52,53) vorgesehen sind, die einen für jedes Rad getrennt vorgebbaren Schlupf ($s_1$,$s_2$,$s_3$,$s_4$) mit der Winkelgeschwindigkeit ($\omega_{Kfz}$) multiplizieren, wobei die Winkelgeschwindigkeit ($\omega_{Kfz}$) jeweils um das erhaltene Produkt ($\omega Kfz \bullet s_{1,2,3,4}$) in jeweils zweiten Vergleichsstellen (54,55,56,57) vermindert wird und die jeweils zweiten Vergleichsstellen (54,55,56,57) die jeweiligen Raddrehzahlen ($\omega_{R1,2,3,4}$) an die jeweils ersten Vergleichsstellen (27) vorgeben.

6. Prüfstand nach Anspruch 2, dadurch gekennzeichnet, daß zur Simulation durchdrehender oder blockierender Räder die Radmomente ($M_{R1}$,$M_{R2}$,$M_{R3}$,$M_{R4}$) jeweils mittels Begrenzer (52...) begrenzt werden.

7. Prüfstand nach Anspruch 6, dadurch gekennzeichnet, daß das zur Begrenzung herangezogene Schlupfmoment ($M_S$) in Abhängigkeit des Kraftschlußbeiwertes ($\mu$) zwischen Reifen und Fahrbahn, der Reifenaufstandskraft ($N_1$,$N_2$,$N_3$,$N_4$) und des Rad-Radius ($r_1$,$r_2$,$r_3$,$r_4$) gebildet wird.

**Claims**

1. Test bed for testing the drive train of a vehicle from the internal combustion engine (1) as far as the driving axles (8, 10, 12, 14), the moment of inertia ($J_{G1}...J_{G4}$), spring stiffnesses ($C_{A1}...C_{A4}$) and extents of damping ($d_{A1}...d_{A4}$) being simulated by means of electronic function elements or by means of a computer (24a, 24b) and torque-controlled electric loading machines (9, 11, 13, 15) serving as transmission elements between the electronic function elements or the computer and the test bed with the test subject, characterised in that at least two mutually independent loading machines (9, 11, 13, 15) can be flanged directly to the shafts of the drive train (8, 10, 12, 14) to be tested, in that a simulation of the wheels ($C_R$ (sic), $d_R$) and of the vehicle acceleration behaviour with the exception of the parts which are actually present as vehicle components is carried out by means of the electronic function elements or of the computer, and in that the vehicle moment of resistance ($M_{FW}$) reduced by the wheel torques ($M_{R1}$, $M_{R2}$, $M_{R3}$, $M_{R4}$) is fed to a first integrator (26) having a time constant proportional to the vehicle moment of inertia ($J_{Kfz}$), it being possible to tap off at the first integrator (26) the angular velocity ($\omega_{Kfz}$) proportional to the vehicle speed ($v_{Kfz}$).

2. Test bed according to Claim 1, characterised in that, to model the wheel torque, the angular velocity ($\omega_{Kfz}$), in each case reduced by the wheel speed ($\omega_{R1}$, $\omega_{R2}$, $\omega_{R3}$, $\omega_{R4}$) in first summing points (27...), is in each case fed to a second integrator (28...) with a time constant proportional to the tyre elasticity ($c_R$) and in each case to first proportional elements (29....) connected in parallel and having a gain factor proportional to the tyre damping ($d_R$), the output signals of the second integrators (28...) and of the first proportional elements (29...) in each case being summed to give the wheel torque ($M_{R1}$, $M_{R2}$, $M_{R3}$, $M_{R4}$).

3. Test bed according to Claim 2, characterised in that, to simulate a cornering manoeuvre of the vehicle, third proportional elements (41, 43, 45, 47) with in each case different gain factors ($K_{i,a}$; $K_{a,i}$) for wheels on the inside of the bend and on the outside of the bend are in each case provided between the first integrator (26) and the respective first summing point (27).

4. Test bed according to one of Claims 1 to 3, characterised in that, to simulate different wheel radii ($r_1$, $r_2$, $r_3$, $r_4$), four proportional elements (42, 44, 46, 48) with in each case different gain factors ($K_{R1}$, $K_{R2}$, $K_{R3}$, $K_{R4}$) for each individual wheel are in each case provided between the first integrator (26) and the respective first summing point (27...).

5. Test bed according to one of Claims 1 to 4, characterised in that, to simulate the kinematic slip, multipliers (50, 51, 52, 53) are in each case provided which multiply a slip ($s_1$, $s_2$, $s_3$, $s_4$) specifiable

separately for each wheel by the angular velocity ($\omega_{Kfz}$), the angular velocity ($\omega_{Kfz}$) in each case being reduced, in each case in second summing points (54, 55, 56, 57), by the product obtained ($\omega_{Kfz}$ • $s_{1,2,3,4}$) and the in each case second summing points (54, 55, 56, 57) specifying the respective wheel speeds ($\omega_{R1,2,3,4}$) to the in each case first summing points (27).

6. Test bed according to Claim 2, characterised in that, to simulate spinning or locking wheels, the wheel torques ($M_{R1}$, $M_{R2}$, $M_{R3}$, $M_{R4}$) are in each case limited by means of limiters (52...).

7. Test bed according to Claim 6, characterised in that the slip torque ($M_S$) used for limitation is formed as a function of the coefficient of friction ($\mu$) between the tyre and the roadway, the vertical tyre force ($N_1$, $N_2$, $N_3$, $N_4$) and the wheel radius ($r_1$, $r_2$, $r_3$, $r_4$).

**Revendications**

1. Banc d'essai pour l'essai de l'appareil propulsif d'un véhicule, du moteur à combustion interne (1) jusqu'aux essieux moteurs (8, 10, 12, 14), le moment d'inertie ($J_{G1}$ ... $J_{G4}$), les élasticités ($C_{A1}$ ... $C_{A4}$) et les amortissements ($d_{A1}$ ... $d_{A4}$) étant simulés au moyen d'éléments de commande électroniques ou d'un calculateur (24a, 24b) et des machines électriques (9, 11, 13, 15) d'application de charge régulées en fonction des moments servant d'éléments de transmission entre les éléments de commande électroniques ou le calculateur et le banc d'essai muni de l'ensemble à essayer, caractérisé par le fait qu'au moins deux machines (9, 11, 13, 15) d'application de charge indépendantes peuvent être accouplées directement aux arbres de l'appareil propulsif (8, 10, 12, 14) à contrôler, que l'on simule, au moyen des éléments de commande électroniques ou du calculateur, les roues ($C_R$, $d_R$) et le comportement à l'accélération du véhicule, exception faite des organes qui existent réellement en tant que composants du véhicule, et que l'on envoie à un premier intégrateur (26) présentant une constante de temps proportionnelle au moment d'inertie du véhicule ($J_{Kfz}$) le moment résistant du véhicule ($M_{FW}$) diminué des moments des roues ($M_{R1}$, $M_{R2}$, $M_{R3}$, $M_{R4}$), la vitesse angulaire ($\omega_{Kfz}$) proportionnelle à la vitesse du véhicule ($V_{Kfz}$) étant disponible à la sortie du premier intégrateur.

2. Banc d'essai selon la revendication 1, caractérisé par le fait que, pour simuler le moment de la roue, on envoie la vitesse angulaire ($\omega_{Kfz}$), de laquelle on a retranché la vitesse de rotation des roues ($\omega_{R1}$, $\omega_{R2}$, $\omega_{R3}$, $\omega_{R4}$) dans de premiers éléments comparateurs (27 ...) correspondants, respectivement à un deuxième intégrateur (28 ...) présentant une constante de temps proportionnelle à l'élasticité des pneus ($C_R$) et à des premiers éléments de transfert à action proportionnelle (29 ...) montés en parallèle et présentant un facteur d'amplification proportionnel à l'amortissement des pneus ($d_R$), les signaux de sortie des deuxièmes intégrateurs (28 ...) et des premiers éléments de transfert à action proportionnelle (29 ...) étant additionnés chaque fois au moment de la roue ($M_{R1}$, $M_{R2}$, $M_{R3}$, $M_{R4}$).

3. Banc d'essai selon la revendication 2, caractérisé par le fait que, pour simuler le déplacement en courbe du véhicule, il est prévu chaque fois, entre le premier intégrateur (26) et le premier élément comparateur (27) concerné, des troisièmes éléments de transfert à action proportionnelle (41, 43, 45, 47) présentant des facteurs d'amplification ($K_{i,a}$; $K_{a,i}$) différents pour les roues à l'intérieur de la courbes et les roues à l'extérieur de la courbe.

4. Banc d'essai selon l'une des revendications 1 à 3, caractérisé par le fait que, pour simuler différents diamètres de roue ($r_1$, $r_2$, $r_3$, $r_4$), il est prévu chaque fois, entre le premier intégrateur (26) et le premier élément comparateur (27...) concerné, des quatrième éléments de transfert à action proportionnelle (42, 44, 46, 48) présentant des facteurs d'amplification ($K_{R1}$, $K_{R2}$, $K_{R3}$, $K_{R4}$) différents pour chacune des roues.

5. Banc d'essai selon l'une des revendications 1 à 4, caractérisé par le fait que, pour simuler le glissement cinématique, il est prévu chaque fois des multipticateurs (50, 51, 52, 53) qui multiplient par la vitesse angulaire ($\omega_{Kfz}$) un glissement ($s_1$, $s_2$, $s_3$, $s_4$) prédéterminé séparément pour chaque roue, la vitesse angulaire ($\omega_{Kfz}$) étant diminuée chaque fois du produit ($\omega_{Kfz}$ • $s_{1,2,3,4}$) obtenu dans des deuxièmes éléments comparateurs (54, 55, 56, 57) et les deuxième éléments comparateurs (54, 55, 56, 57) fournissant chaque fois les vitesses de rotation des roues ($\omega_{R1,2,3,4}$) aux premiers éléments comparateurs (27).

6. Banc d'essais selon la revendication 2, caractérisé par le fait que, pour simuler des roues qui patinent ou qui se bloquent, on limite les moments des roues ($M_{R1}$, $M_{R2}$, $M_{R3}$, $M_{R4}$) au moyen de limitateurs (52...) correspondants.

7. Banc d'essais selon la revendication 6, caractérisé par le fait que le moment de glissement ($M_S$) utilisé pour la limitation est calculé en fonction du coefficient d'adhérence ($\mu$) entre le pneu et la chaussée, de l'effort résistant du pneu ($N_1$, $N_2$, $N_3$, $N_4$) et du rayon de la roue ($r_1$, $r_2$, $r_3$, $r_4$).

Fig. 1

Fig. 2

EP 0 338 373 B1

Fig. 3

Fig. 4

EP 0 338 373 B1

Fig. 5

EP 0 338 373 B1

Fig. 6

16

Fig. 7